# EUROPÄISCHE PATENTSCHRIFT

(11) **EP 2 118 820 B1**
(45) Veröffentlichungstag und Bekanntmachung des Hinweises auf die Patenterteilung: **04.09.2013**
(21) Anmeldenummer: 07858118.8
(22) Anmeldetag: 21.12.2007
(51) Int. Cl.: G06K 19/073, G06K 7/10, G07D 7/00, B42D 15/10, G02F 1/13357, G06K 19/077, G06K 19/07

(54) **DOKUMENT MIT EINEM OPTISCHEN SENDER**
DOCUMENT WITH AN OPTICAL TRANSMITTER
DOCUMENT MUNI D'UN ÉMETTEUR OPTIQUE

(30) Priorität: 10.01.2007 DE 102007002385
(43) Veröffentlichungstag der Anmeldung: 18.11.2009
(73) Patentinhaber: Bundesdruckerei GmbH, 10958 Berlin (DE)
(72) Erfinder: PAESCHKE, Dr. Manfred, 16348 Wandlitz (DE); PFLUGHOEFFT, Malte, 13347 Berlin (DE); FISCHER, Jörg, 13053 Berlin (DE)
(74) Vertreter: Richardt Patentanwälte GbR
(86) Internationale Anmeldenummer: PCT/EP2007/064511
(87) Internationale Veröffentlichungsnummer: WO 2008/083922

(56) Entgegenhaltungen:
- WO-A-98/21686
- US-A1- 2005 150 740
- US-A1- 2006 115 110

## Beschreibung

Die Erfindung betrifft ein Dokument, insbesondere ein Wert- oder Sicherheitsdokument, ein Lesegerät für ein solches Dokument und ein Kommunikationsverfahren.

Dokumente mit einem integrierten elektronischen Schaltkreis sind aus dem Stand der Technik an sich in verschiedener Form bekannt. Beispielsweise gibt es solche Dokumente in überwiegend papierbasierter Form, wie zum Beispiel als elektronischen Reisepass, oder als Chipkarte, insbesondere als so genannte Smart Card, in kontaktbehafteter, kontaktloser oder Dual-Interface Ausführung.

Insbesondere sind verschiedene Funk-Erkennungssysteme für solche Dokumente aus dem Stand der Technik bekannt, die auch als Radio Frequency Identification (RFID) Systeme bezeichnet werden. Vorbekannte RFID-Systeme beinhalten im Allgemeinen zumindest einen Transponder und eine Sende-Empfangseinheit. Der Transponder wird auch als RFID-Etikett, RFID-Chip, RFID-Tag, RFID-Label oder Funketikett bezeichnet; die Sende-Empfangseinheit wird auch als Lesegerät oder Reader bezeichnet. Ferner ist oft die Integration mit Servern, Diensten und sonstigen Systemen, wie zum Beispiel Kassensystemen oder Warenwirtschaftssystemen über eine so genannte Middle Ware vorgesehen.

Die auf einem RFID-Transponder gespeicherten Daten werden über Radiowellen verfügbar gemacht. Bei niedrigen Frequenzen geschieht dies induktiv über ein Nahfeld, bei höheren Frequenzen über ein elektromagnetisches Fernfeld. Die Entfernung, über die ein RFID-Transponder angesprochen und ausgelesen werden kann, schwankt aufgrund der Ausführung (passiv / aktiv), dem benutzten Frequenzband, der Sendestärke und anderen Umwelteinflüssen zwischen wenigen Zentimetern und mehr als einem Kilometer.

Ein RFID-Transponder beinhaltet üblicherweise einen Mikrochip und eine Antenne, die in einem Träger oder Gehäuse untergebracht oder auf ein Substrat aufgedruckt sind. Aktive RFID-Transponder verfügen im Gegensatz zu passiven Transpondern ferner über eine Energiequelle, wie zum Beispiel eine Batterie.

RFID-Transponder sind für verschiedene Dokumente einsetzbar, insbesondere in Chipkarten, beispielsweise zur Realisierung einer elektronischen Geldbörse oder für Electronic Ticketing. Des Weiteren werden diese in Papier oder Kunststoff, wie zum Beispiel in Wert- und Sicherheitsdokumenten, insbesondere Geldscheinen und Ausweisdokumenten, integriert.

Aus der DE 201 00 158 U1 ist beispielsweise eine Identifikations- und Sicherheitskarte aus laminierten und / oder gespritzten Kunststoffen bekannt, die einen integrierten Halbleiter mit einer Antenne zur Durchführung eines RFID-Verfahrens beinhaltet. Aus der DE 10 2004 008 841 A1 ist ferner ein buchartiges Wertdokument, wie zum Beispiel ein Passbuch bekannt geworden, welches eine Transpondereinheit beinhaltet.

Solche Sicherheits- oder Wertdokumente werden im Stand der Technik zum Teil als Chipkarten realisiert. Chipkarten können eine integrierte Anzeigevorrichtung aufweisen, wie es z.B. aus EP 0920675, WO2004/080100 und US 6,019,284 bekannt ist.

Zum Beispiel aus der US 6,019,284 und der EP 0 920 675 sind flexible Karten mit Display bekannt. Diese Karten haben jedoch nur ein einziges Anzeigeelement. Aus der US 6,340,965 B1 ist ferner elektronisches Papier bekannt, durch welches ein wieder verwendbares Formular gebildet wird.

Von der Firma AU Optronics ist ferner ein zweiseitiges OLED-Display vorgestellt worden, das auf seiner Vorder- und Rückseite unabhängig voneinander zwei Farbbilder darstellen kann. Solche Displays sind für die Anwendung in Handys vorgesehen. Aus der WO 03/009059 A1 ist ein elektrophoretisches Display mit Mikrosphären oder Mikrocups bekannt geworden.

Sicherheits- oder Wertdokumente können mit einer kontaktbehafteten oder kontaktlosen Schnittstelle, beispielsweise einem RFID-Interface, ausgestattet sein oder mit einer Schnittstelle, die sowohl eine drahtgebundene als auch eine drahtlose Kommunikation mit einem Chipkarten-Terminal zulässt. Im letzteren Fall spricht man auch von so genannten Dual-Interface Chipkarten. Chipkarten-Kommunikationsprotokolle und -verfahren sind zum Beispiel in der Norm ISO 14443 festgelegt.

Ein Nachteil solcher Dokumente mit RFID-Funktionalität ist, dass ohne Einverständnis des Trägers des Dokuments die RFID-Schnittstelle angesprochen werden kann, wenn sich das Dokument beispielsweise in der Brieftasche des Trägers befindet.

Ein Schutzmechanismus für Reisedokumente zum Schutz gegen unbefugtes Auslesen der Daten aus einem solchen Dokument ist als "Basic Access Control" bekannt, vgl. hierzu "Machine Readable Travel Documents, Technical Report, PKI for Machine Readable Travel Documents Offering ICC Read-Only Access, Version 1.1, Oktober 01, 2004, International Civil Aviation Organisation (ICAO) http://www.csca-si.gov.si/TR-PKI mrtds ICC read-only access v1 1.pdf

Aus dem Stand der Technik sind ferner Verfahren bekannt, Daten unter kryptographischem Schutz elektronisch zu speichern. Eine in den vergangenen zwei Jahrzehnten zu großer Verbreitung gelangte Form geschützter Speicher sind elektronische Chipkarten, die durch ISO 7816 Teil 1 bis 4 normiert sind. Zu den Anwendungsgebieten der Chipkartentechnologie gehört die Einführung maschinenlesbarer Reisedokumente, von der eine Erhöhung der Sicherheit wie auch der Effizienz der Passagierkontrollen insbesondere in der weltweiten Luftfahrt erhofft wird.

Aus der zum Anmeldezeitpunkt unveröffentlichten DE 10 2006 031 422.0 derselben Anmelderin ist ein Wert- oder Sicherheitsdokument mit einer Anzeigevorrichtung bekannt, die ein optisches Signal abgibt, das in einem visuell wahrnehmbaren optischen Bereich liegt, aber aufgrund seiner Widerholfrequenz bedingt durch die Trägheit des menschlichen Auges nicht wahrnehmbar ist.

Aus der DE 103 17 257 A1 ist ein kontaktloser Datenträger bekannt, der mit einem optischen Leuchtmittel ausgestattet ist. Auf dem Datenträger ist z.B. eine Infrarot-Leuchtdiode angeordnet (vgl. Abschnitt 0027 und Fig. 2 der DE 103 17 257 A1). Obwohl die optische Datenübertragung zu dem Lesegerät hier im Infrarot-Bereich erfolgen kann, so bleibt sie doch nicht unbemerkt, da das Vorhandensein der Infrarot-Leuchtdiode auf dem Datenträger augenfällig ist. Dies erleichtert eine Nachstellung des kontaktlosen Datenträgers sowie ein Ausspähen der über die Infrarot-Verbindung übertragenen Daten.

Aus WO 98/21686 ist eine Chipkarte mit photovoltaischen Zellen, IR-Zellen und einer elektrolumineszierenden Diode bekannt. Diese elektro-optischen Elemente sol-len möglichst weit von einander beabstandet sein, um die hierdurch mit einem Schreib-Lesegerät gebildeten Kanäle voneinander möglichst zu entkoppeln.

Aus US 2006/0115110 A1 ist ein Dokument mit einer LED-Anzeigevorrichtung bekannt, welche zur Anzeige von Informationen dient.

Die der Erfindung zugrunde liegenden Aufgaben werden jeweils mit den Merkmalen der unabhängigen Patentansprüche gelöst. Bevorzugte Ausführungsformen der Erfindung sind in den abhängigen Patentansprüchen angegeben.

Erfindungsgemäß wird ein Dokument, insbesondere ein Wert- oder Sicherheitsdokument, mit einem optischen Sender zur Ausgabe mindestens eines maschinenlesbaren optischen Signals in einem visuell für das menschliche Auge nicht wahrnehmbaren spektralen Bereich geschaffen.

Die Erfindung ermöglicht es also, Daten verschiedener Art auf optischem Wege aus einem Wert- oder Sicherheitsdokument auszugeben, wie zum Beispiel kryptographische Schlüssel, verschlüsselte und/oder signierte Informationen, Transaktionsnummern, Bar-Codes, eine Gültigkeitsdauer, Berechtigungsinformationen, Personalisierungsdaten oder dergleichen, und zwar so, dass dies für einen Benutzer ohne technische Hilfsmittel visuell mit wahrnehmbar ist.

Erfindungsgemäß wird dadurch eine Alternative zu vorbekannten Wert- oder Sicherheitsdokumenten geschaffen. Im Vergleich zu vorbekannten Wert- oder Sicherheitsdokumenten, bei denen die Signalausgabe über Radiowellen erfolgt, haben Ausführungsformen der Erfindung den Vorteil, dass eine Datenausgabe aus dem Wert- oder Sicherheitsdokument nicht unbemerkt, ohne Zustimmung des Trägers des Dokuments erfolgen kann, da ja eine optische Verbindung mit dem Lesegerät herstellbar sein muss, was nur dann der Fall ist, wenn sich das Dokument ausserhalb z.B. der Brieftasche des Trägers des Dokuments befindet. Dies ist insbesondere für solche Dokumente vorteilhaft, welche nicht wie z.B. maschinenlesbare Reisedokumente (Machine Readable Travel Documents - MRTDs) mittels normierter Verfahren abgesichert sind.

Ausführungsformen der Erfindung sind ferner hinsichtlich einer verbesserten Fälschungssicherheit und einer verbesserten Sicherheit gegen Manipulationen gegenüber dem Stand der Technik vorteilhaft. Die Ausführung eines Wert- oder Sicherheitsdokuments mit einer Anzeigevorrichtung zur Ausgabe eines maschinenlesbaren optischen Signals, welches durch einen Benutzer nicht visuell erfassbar ist, ist nämlich kaum durch einen Fälscher kopier- oder manipulierbar.

Nach einer Ausführungsform der Erfindung umschließt der Dokumentenkörper den Sender vollständig, sodass das Vorhandensein des Senders in dem Dokument von einem Benutzer ohne technische Hilfsmittel nicht feststellbar ist. Beispielsweise besteht der Dokumentenkörper aus einem Material, dass in dem visuell nicht wahrnehmbaren spektralen Bereich, in dem der Sender sendet, transparent und in dem visuell wahrnehmbaren Bereich opak ist. Insbesondere kann es sich bei dem Dokumentenkörper um ein Kunststoffspritzgußteil handeln, wobei dem Kunststoff Pigmente beigemischt sein können, um den Kunststoff in dem visuell wahrnehmbaren Bereich opak zu machen.

Nach einer Ausführungsform der Erfindung ist der optische Sender zur Abstrahlung in einem Infrarot- (IR) und/oder ultraviolett (UV) spektralen Bereich ausgebildet. Beispielsweise beinhaltet der optische Sender eine oder mehrere IR- und/oder UV-Leuchtdioden (LEDs).

Nach einer Ausführungsform der Erfindung hat das Dokument einen Dokumentenkörper, der papier- und/oder kunststoffbasiert sein kann. Der optische Sender des Dokuments ist in den Dokumentenkörper integriert. Dies erfolgt so, dass das Vorhandensein des optischen Senders in dem Dokumentenkörper durch einen Benutzer visuell nicht wahrnehmbar ist. Um die Abstrahlung des maschinenlesbaren optischen Signals durch den Dokumentenkörper hindurch zu ermöglichen, hat das Dokument zumindest einen Teilbereich, der für das maschinenlesbare optische Signal im Wesentlichen transparent ist. Dieser Teilbereich befindet sich beispielsweise auf einer der Seiten des Dokuments und überdeckt den darunter befindlichen optischen Sender.

Nach einer Ausführungsform der Erfindung hat das Dokument einen schichtförmigen Aufbau. Eine Oberfläche des Dokuments wird durch eine Schicht gebildet, die in dem verwendeten Teil des visuell nicht wahrnehmbaren spektralen Bereich transparent und in dem visuell wahrnehmbaren spektralen Bereich opak, also im wesendlichen nicht strahlungsdurchlässig, ist. Diese Schicht kann aus einem Kunststoffmaterial bestehen, wie z.B. aus Polycarbonat (PC), Polyethylenterephthalat (PET), Polyvinylchlorid (PVC), Polyethylen (PE) oder Polypropylen (PP). Das Kunststoffmaterial kann Zusatzstoffe aufweisen, um das Kunststoffmaterial in dem visuell wahrnehmbaren spektralen Bereich opak zu machen. Hierbei kann es sich um Farbpigmente handeln, um das Kunststoffmaterial einzufärben oder um Pigmente mit einer das Licht streuenden Wirkung, wie z.B. Titandioxid. Alternativ oder zusätzlich kann die Schicht bedruckt sein, um den von der Schicht überdeckten optischen Sender der visuellen Wahrnehmung durch einen Benutzer zu entziehen.

Erfindungsgemäß ist der optische Sender als eine Anzeigevorrichtung ausgebildet. Bei der Anzeigevorrichtung kann es sich um eine segmentierte Anzeigevorrichtung handeln, beispielsweise eine Anzeigevorrichtung mit der Möglichkeit der direkten elektrischen Adressierung einzelner Displaysegmente, insbesondere Wort- und Bitleitungen zur Ansteuerung einzelner Segmente. Nach einer weiteren Ausführungsform handelt es sich bei der Anzeigevorrichtung um ein Segmentdisplay, eine Aktiv- oder Passivmatrix.

Nach einer Ausführungsform der Erfindung handelt es sich bei der Anzeigevorrichtung um eine LED-Anzeige, LCD-Anzeige, Anzeige auf der Basis des Elektrowettingeffektes, bistabile Anzeige, insbesondere eine elektrophoretische oder Drehelement-Anzeige, oder eine semi-bistabile Anzeige, wie zum Beispiel eine elektrochrome Anzeige.

Nach einer Ausführungsform der Erfindung hat das Dokument einen vor der Anzeigevorrichtung angeordneten Filter zum Durchlass von Strahlung in dem visuell nicht wahrnehmbaren spektralen Bereich.

Nach einer Ausführungsform der Erfindung ist die Anzeigevorrichtung reflektiv oder transmissiv ausgebildet.

Nach einer Ausführungsform der Erfindung beinhaltet die Anzeigevorrichtung Anzeigeelemente, die in dem visuell nicht wahrnehmbaren spektralen Bereich absorbierend wirken. Diese Anzeigeelemente befinden sich in einer Flüssigkeit, die in dem visuell nicht wahrnehmbaren spektralen Bereich nicht absorbierend wirkt, sondern im Wesentlichen transparent ist. Durch Ansteuerung der Anzeigeelemente kann ein Kontrast in dem visuell nicht wahrnehmbaren spektralen Bereich erzeugt werden, der durch einen optischen Sensor erfassbar ist.

Nach einer Ausführungsform der Erfindung ist die Anzeigevorrichtung zur Ausgabe von einem oder mehreren der maschinenlesbaren optischen Signale für eine serielle und/oder parallel Datenübertragung ausgebildet. Die Modulation des optischen Signals erfolgt dabei beispielsweise durch Amplituden-, Pulsweiten-, Phasen- und/oder Frequenzmodulation.

Nach einer Ausführungsform der Erfindung hat das Wert- oder Sicherheitsdokument eine Ansteuerschaltung für die Anzeigevorrichtung, wobei die Ansteuerschaltung als Treiber zur Ansteuerung der Anzeigevorrichtung für die Ausgabe des maschinenlesbaren optischen Signals dient.

Erfindugsgemäß hat das Wert- oder Sicherheitsdokument einen integrierten elektronischen Schaltkreis zur Ansteuerung der Anzeigevorrichtung und zur Modulation des maschinenlesbaren optischen Signals. Insbesondere kann der integrierte elektronische Schaltkreis zum Zugriff auf einen Datenspeicher des Wert- oder Sicherheitsdokuments dienen, um aus diesem Datenspeicher ausgelesene Daten oder auf der Basis dieser Daten generierte weitere Daten in der Form eines maschinenlesbaren optischen Signals auszugeben.

Nach einer Ausführungsform der Erfindung hat das Wert- oder Sicherheitsdokument einen integrierten elektronischen Schaltkreis zur Durchführung eines kryptographischen Protokolls, wobei die Ausgabe des maschinenlesbaren optischen Signals und/oder die Anzeige der Daten auf der Anzeigevorrichtung von der vorherigen erfolgreichen Durchführung des kryptographischen Protokolls abhängt. Dadurch ist gewährleistet, dass eine Ausgabe bzw. Anzeige über die Anzeigevorrichtung nur bei Vorliegen einer entsprechenden Berechtigung erfolgt.

Nach einer Ausführungsform der Erfindung wird durch die Anzeigevorrichtung eine Information gesendet, die für die Durchführung des kryptographischen Protokolls verwendet wird. Bei der Information kann es sich um eine Kennung, ein Chiffrat, einen kryptographischen Schlüssel oder dergleichen handeln. Beispielsweise wird auf der Grundlage dieser Information ein Challenge-Response-Verfahren oder dergleichen durchgeführt.

Nach einer Ausführungsform der Erfindung handelt es sich bei dem Dokument um ein Ausweisdokument, insbesondere einen Personalausweis, einen Reisepass, ein Visum oder einen Firmenausweis, eine Kreditkarte, einen Führerschein, einen Berechtigungsnachweis oder dergleichen.

Nach einer Ausführungsform der Erfindung handelt es sich um ein papierbasiertes Dokument oder eine Chipkarte.

Nach einer Ausführungsform der Erfindung hat das Wert- oder Sicherheitsdokument eine Schnittstelle zur Energieversorgung der Anzeigevorrichtung, des integrierten elektronischen Schaltkreises und/oder der Ansteuerschaltung und/oder zur Kommunikation mit einem Lesegerät. Die Schnittstelle kann kontaktbehaftet oder kontaktlos, insbesondere als RFID-Schnittstelle ausgebildet sein. Ferner kann die Schnittstelle auch als so genanntes Dual Mode Interface ausgebildet sind. Die Schnittstelle kann auf einer elektrischen, kapazitiven, induktiven, magnetischen, optischen oder einer anderen physikalischen Kopplungsmethode beruhen. Für kontaktlose Kopplung über eine Antenne, kann diese beispielsweise als Spule, Dipol oder in Form von kapazitiven Flächen ausgebildet sein.

Beispielsweise hat die Schnittstelle eine Antenne, insbesondere eine RFID-Antenne, zur Einkopplung der elektrischen Energie von einem externen Schreib-und/oder Lesegerät. Alternativ oder zusätzlich kann das Wert- oder Sicherheitsdokument aber auch über eine integrierte Energieversorgung, wie zum Beispiel eine Batterie, eine Photozelle oder dergleichen verfügen.

Nach einer Ausführungsform der Erfindung wird die Anzeigevorrichtung zur Anzeige und/oder Ausgabe in Form des maschinenlesbaren Signals von zeitlich veränderlicher Information angesteuert. Hierbei kann es sich um Informationen handeln, die sich in Abhängigkeit von der Zeit und/oder dem Datum ändert, oder um sich zyklisch ändernde Information.

In einem weiteren Aspekt betrifft die Erfindung ein Kommunikationsverfahren für ein Wert- oder Sicherheitsdokument, wobei eine Datenausgabe durch Ausgabe eines maschinenlesbaren optischen Signals über einen optischen Sender des Wert- oder Sicherheitsdokuments erfolgt, wobei das maschinenlesbare optische Signal in einem visuell für das menschliche Auge nicht wahrnehmbaren spektralen Bereich liegt.

In einem weiteren Aspekt betrifft die Erfindung ein Lesegerät für ein erfindungsgemäßes Wert- oder Sicherheitsdokument. Das Lesegerät ist zum Empfang des maschinenlesbaren optischen Signals des Wert- oder Sicherheitsdokuments ausgebildet.

Im Weiteren werden Ausführungsbeispiele der Efindung mit Bezugnahme auf die Zeichnungen näher erläutert. Es zeigen:
- Figur 1: eine schematische Explosionsdarstellung einer ersten Ausführungsform eines erfindungsgemäßen Dokuments,
- Figur 2: eine Draufsicht einer zweiten Ausführungsform eines erfindungsgemäßen Dokuments,
- Figur 3: einen schematischen Querschnitt einer Ausführungsform eines erfindungsgemäßen Dokuments mit einer transmissiven oder emissiven Anzeigevorrichtung,
- Figur 4: einen schematischen Querschnitt einer Ausführungsform eines erfindungsgemäßen Dokuments mit einer reflektiven Anzeigevorrichtung,
- Figur 5: eine schematische Explosionsdarstellung einer Ausführungsform einer erfindungsgemäßen Anzeigevorrichtung basierend auf einer monochrom Flüssigkristallanzeige,
- Figur 6: eine schematische Explosionsdarstellung einer Ausführungsform einer erfindungsgemäßen transmissiven Anzeigevorrichtung,
- Figur 7: eine schematische Schnittansicht einer erfindungsgemäßen elektrophoretischen Anzeigevorrichtung,
- Figur 8: eine schematische Schnittansicht einer weiteren Ausführungsform einer erfindungsgemäßen Anzeigevorrichtung basierend auf einem elektrophoretischen Display,
- Figur 9: einen schematischen Querschnitt einer weiteren Ausführungsform einer erfindungsgemäßen Anzeigevorrichtung basierend auf einem elektrophoretischen Display,
- Figur 10: ein Blockdiagramm einer Ausführungsform eines erfindungsgemäßen Dokuments und eines dafür vorgesehenen Lesegeräts,
- Figur 11: ein Flussdiagramm einer Ausführungsform eines erfindungsgemäßen Kommunikationsverfahrens.

Elemente der nachfolgenden Figuren, die einander entsprechen, sind mit denselben Bezugszeichen gekennzeichnet.

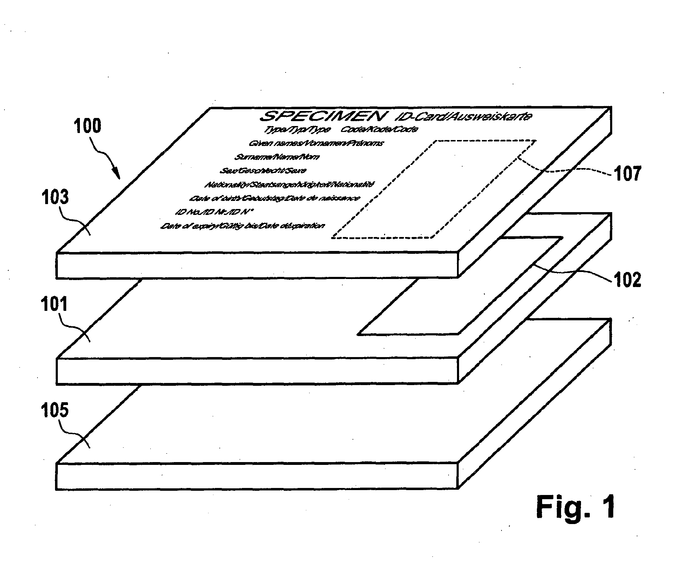

Die Figur 1 zeigt ein Dokument 100, das kartenförmig ausgebildet ist. Das Dokument 100 hat ein Inlay 101 zwischen einer bedruckten und personalisierten Vorderseite 103 und einer Rückseite 105. Zusätzlich kann das Dokument 100 weitere Schichten beinhalten, die hier der Übersichtlichkeit halber nicht dargestellt sind.

Das Inlay 101 hat eine Ausnehmung, innerhalb derer sich ein optischer Sender befindet, der eine Anzeigevorrichtung 102 aufweist. Der Sender ist zur Abstrahlung eines maschinenlesbaren optischen Signals in einen visuell nicht wahrnehmbaren spektralen Bereich ausgebildet. Unter einem ,visuell nicht wahrnehmbaren spektralen Bereich" wird dabei ein spektraler Bereich verstanden, der für das menschliche Auge ohne technische Hilfsmittel nicht wahrnehmbar ist. Beispielsweise liegt das optische Signal in einem Infrarot-Bereich oder einem ultravioletten Bereich des optischen Frequenzspektrums.

Das Dokument 100 ist so ausgebildet, das es den Sender vollständig umschließt, sodass dessen Vorhandensein in dem Dokument 100 von einem Benutzer ohne technische Hilfsmittel nicht feststellbar ist.

Damit das von dem optischen Sender ausgegebene maschinenlesbare optische Signal von einem externen Lesegerät empfangen werden kann, ist das Dokument 100 in zumindest einem Teilbereich transparent für den visuell nicht wahrnehmbaren spektralen Bereich, in dem der optische Sender abstrahlt. In der hier betrachteten Ausführungsform befindet sich ein solcher in dem visuell nicht wahrnehmbaren spektralen Bereich transparenter Teilbereich 107 des Dokuments auf der Vorderseite 103 oberhalb des Senders, der in dem Inlay 101 eingearbeitet ist.

Beispielsweise ist der Teilbereich 107 für Infrarot-Strahlung transparent, insbesondere in einem Bereich von 700 bis 1100 nm. Zumindest in dem Teilbereich 107 oder vollständig besteht die Vorderseite 103 aus einem entsprechenden im Infrarot-Bereich transparenten Material, wie zum Beispiel aus PC, PET, PVC, PE oder PP. Das Material kann Zusatzstoffe beinhalten, um es in dem optisch wahrnehmbaren spektralen Bereich opak zu machen, so dass der Sender 102 verdeckt wird, um ihn vor einem Betrachter zu verbergen. Alternativ oder zusätzlich kann der Teilbereich 107 einen Aufdruck tragen, um den Sender 102 zu verbergen.

Die auf der Vorderseite 103 aufgedruckte Personalisierungsinformation, wie zum Beispiel Name, Geschlecht, Nationalität, etc. des Trägers des Dokuments 100 und/oder auf der Vorderseite aufgedruckte Sicherheitsmerkmale, wie zum Beispiel Liniendruck oder dergleichen, kann mit Druckfarben erfolgen, die eine ausreichende Transparenz im infraroten Spektralbereich aufweisen. Solche Druckfarben sind handelsüblich und dem Fachmann bekannt.

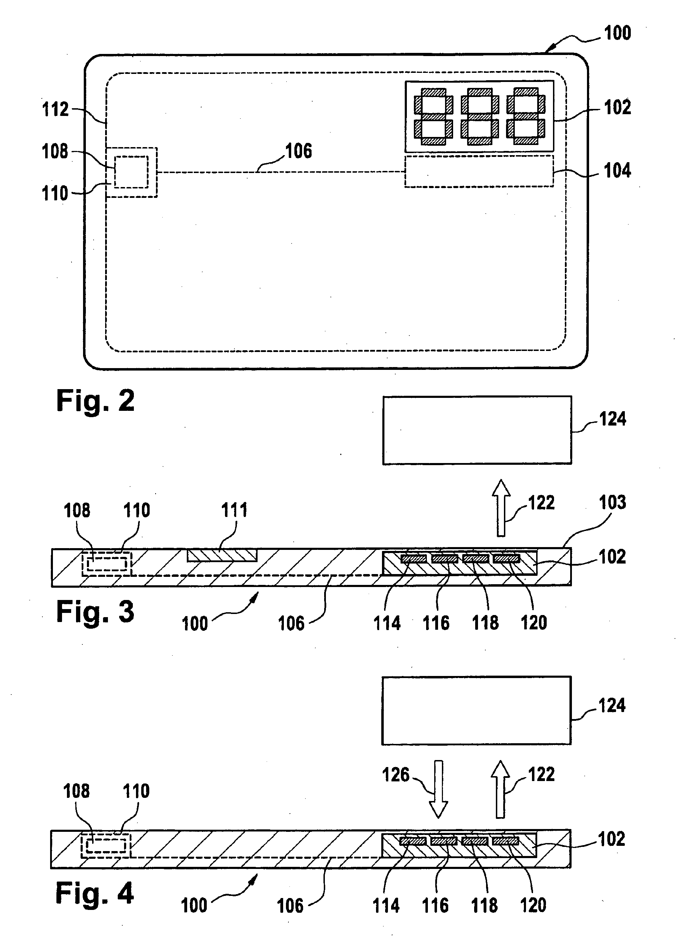

Die Figur 2 zeigt eine Ausführungsform eines erfindungsgemäßen Dokuments 100. Bei dem Dokument 100 handelt es sich um ein Wert- oder Sicherheitsdokument, wie zum Beispiel ein Ausweisdokument, insbesondere einen Personalausweis, einen Reisepass, ein Visum oder einen Firmenausweis, eine Kreditkarte, einen Führerschein, einen Berechtigungsnachweis oder dergleichen

In der hier betrachteten Ausführungsform hat das Dokument 100 eine einzige Anzeigevorrichtung 102, wie zum Beispiel eine Photolumineszenz-Löschungsanzeige, eine elektrophoretische Anzeige, eine elektrochrome Anzeige, eine Flüssigkeitskristallanzeige (LCD), LED-Anzeige, insbesondere anorganische LED oder organische LED-Anzeige (OLED), Drehelementanzeige, Balkenanzeige oder einer Anzeige auf Basis des Elektrowetting-Effektes oder ein flexibles Display, wie es z.B. von der Firma Citala (http: www. citala. com) erhältlich ist oder eine Hybridanzeige. Eine Hybridanzeige ist eine Anzeige, die eine Kombination verschiedenen Anzeigen darstellt. Vorzugsweise werden flexible Displays eingesetzt.

Zur Ansteuerung der Anzeigevorrichtung 102 dient ein Treiber 104. Der Treiber 104 ist über eine Datenleitung 106 mit einem integrierten elektronischen Schaltkreis 108 verbunden. Der Treiber 104 kann auch einen integralen Bestandteil des integrierten elektronischen Schaltkreises 108 bilden.

Der integrierte elektronische Schaltkreis 108 kann sich in einem so genannten Modul 110 befinden, insbesondere einem Chipkartenmodul. Durch das Modul 110 wird eine kontaktbehaftete oder kontaktlose Schnittstelle oder eine Dual-Interface-Schnittstelle für die Kommunikation mit dem integrierten Schaltkreis 108 gebildet. Das Dokument 100 kann ferner eine oder mehrere Antennen 112 aufweisen. Die Antenne 112 ist mit dem Modul 110 verbunden. Die Antenne 112 kann für die Energieversorgung des integrierten Schaltkreises 108, des Treibers 104 und/oder der Anzeigevorrichtung 102 dienen. Hierzu wird von einem externen Gerät elektrische Energie mit Hilfe der Antenne 112 eingekoppelt. Alternativ oder zusätzlich dient die Antenne 112 zur drahtlosen Kommunikation mit einem externen Gerät, beispielsweise über ein RFID-Verfahren.

Der integrierte elektronische Schaltkreis 108 generiert ein Steuersignal, das über die Datenleitung 106 zu dem Treiber 104 übertragen wird. Durch das Steuersignal wird der Treiber 104 so angesteuert, so dass über die Anzeigevorrichtung 102 ein maschinenlesbares optisches Signal in einem visuell nicht wahrnehmbaren spektralen Bereich ausgegeben wird.

Die Anzeigevorrichtung 102 ist als Segment- oder Matrixdisplay ausgebildet. Die Ausgabe des maschinenlesbaren optischen Signals erfolgt dann durch Ansteuerung von einem oder mehreren der Anzeigeelemente durch den Treiber 104. Dem über die Anzeigevorrichtung 102 ausgegebenen optischen Signal ist aufgrund einer entsprechenden Ansteuerung des Treibers 104 von den integrierten elektronischen Schaltkreis 108 eine Information aufmoduliert, beispielsweise durch Amplituden-, Pulsweiten-, Phasen- und/oder Frequenzmodulation.

Wenn das optische Signal eine Trägerfrequenz zum Beispiel im IR oder UV Bereich aufweist, kann es von einem Benutzer nicht wahrgenommen werden. Ausführungsformen des Dokuments 100 ermöglichen zusätzlich die Ausgabe des maschinenlesbaren optischen Signals in einer visuell durch den Benutzer erfassbaren Form, beispielsweise in Form eines 2D-Bar-Codes oder dergleichen, auf einer weiteren Anzeigevorrichtung (in Fig. 2 nicht gezeigt) des Dokuments. Auch in diesem Fall kann jedoch das optische Signal von dem Benutzer nicht kognitiv erfasst werden, da dieses ausschließlich für die maschinelle Auswertung und Weiterverarbeitung vorgesehen ist. Es kann aber auch zusätzlich zu dem maschinenlesbaren optischen Signal ein visuell und kognitiv durch den Benutzer erfassbares Signal von der weiteren Anzeigevorrichtung ausgegeben werden.

Insbesondere können über die Anzeigevorrichtung 102 in Form des maschinenlesbaren optischen Signals sensitive Informationen, wie zum Beispiel kryptographische Schlüssel, verschlüsselte und/oder signierte Informationen, Transaktionsnummern, Berechtigungsinformationen, Personalisierungsdaten, biometrische Daten und dergleichen ausgegeben werden.

Ergänzend können diese Informationen ganz oder teilweise auch im Klartext auf der weiteren Anzeigevorrichtung des Dokuments 100 dargestellt werden, so dass die Information durch einen Benutzer visuell wahrnehmbar ist. Ferner ist es möglich, dass bestimmte Informationen nur in Form des maschinenlesbaren optischen Signals über die Anzeigevorrichtung 102 und andere Informationen nur im Klartext über die weitere Anzeigevorrichtung ausgegeben werden.

Alternativ oder zusätzlich zu der Antenne 112 kann das Dokument 100 über eine interne Energiequelle wie zum Beispiel eine Batterie oder eine Solarzelle verfügen. In einer weiteren Ausführungsform kann das Dokument über eine kontaktbehaftete Schnittstelle verfügen, über welche die Energie zur Verfügung gestellt wird. Für eine externe Energieversorgung über die Antenne 112 kann diese beispielsweise als Spule, Dipol oder in Form von kapazitiven Flächen ausgebildet sein. Die Antenne 112 kann zum Beispiel nur für die Energieversorgung der Anzeigevorrichtung 102 und/oder des integrierten elektronischen Schaltkreises 108 und/oder des Treibers 104 verwendet werden oder sie kann alternativ oder zusätzlich auch für den Aufbau einer Kommunikationsverbindung zum Senden und/oder Empfangen von Daten von einem externen Gerät verwendet werden, insbesondere einer RFID Kommunikationsverbindung.

Die Figur 3 zeigt einen schematischen Querschnitt durch eine Ausführungsform eines erfindungsgemäßen Dokuments 100. Bei dieser Ausführungsform ist die Anzeigevorrichtung 102 in Anzeigeelemente oder Segmente 114, 116, 118 und 120 aufgeteilt, d.h. es handelt sich um ein Segment-/Aktiv- oder Passivmatrixdisplay. Eines oder mehrere der Segmente 114 bis 120 werden von dem integrierten elektronischen Schaltkreis 108 über den Treiber 104 zur Ausgabe eines maschinenlesbaren optischen Signals 122 angesteuert, welches von einem externen Gerät 124 empfangen wird. Das Gerät 124, welches hier als Lesegerät ausgebildet ist, demoduliert das optische Signal 122, um die darin empfangenen Informationen zu erhalten. Diese Informationen werden durch das Gerät 124 maschinell weiterverarbeitet und/oder ausgegeben, beispielsweise für Kontrollzwecke.

Beispielsweise ist zumindest eines der Segmente zur Abstrahlung des maschinenlesbaren optischen Signals 122 in einem visuell nicht wahrnehmbaren spektralen Bereich ausgebildet.

Bei einer Ausführungsform der Anzeigevorrichtung 102 der Figur 3 handelt es sich um ein transmissives Display mit Hintergrundbeleuchtung im nicht-sichtbaren Bereich des Lichts. Die opake Vorderseite 103 hat bei dieser Ausführungsform eine Öffnung, in der die weitere Anzeigevorrichtung 111 angeordnet ist. Die Anzeigevorrichtung 111 dient zur Wiedergabe in dem visuell wahrnehmbaren spektralen Bereich; das Vorhandensein der Anzeigevorrichtung 111 ist für einen Benutzer augenfällig, da die Vorderseite 103 durch die Anzeigevorrichtung 111 unterbrochen wird. Die Anzeigevorrichtung 111 kann über einen separaten Treiber (in der Fig. 3 nicht gezeigt) des Dokuments 100 von dem Schaltkreis 108 angesteuert werden.

Die Figur 4 zeigt eine alternative Ausführungsform, bei der die Anzeigevorrichtung reflektiv ausgebildet ist. In diesem Fall generiert das Gerät 124 einen optischen Lesestrahl 126, um das von der Anzeigevorrichtung 102 in einem visuell nicht wahrnehmbaren spektralen Bereich ausgegebene Signal zu erfassen.

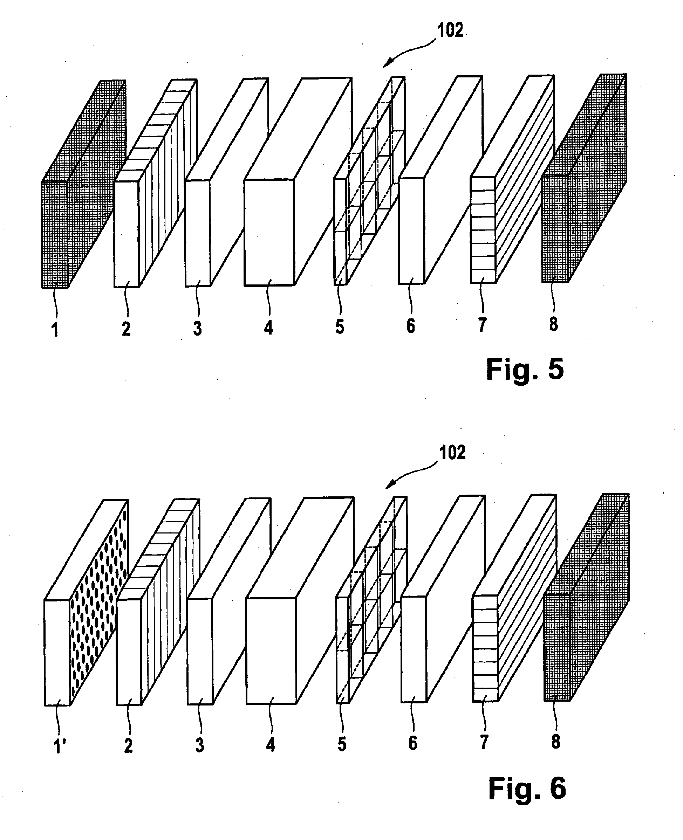

Die Figur 5 zeigt eine Ausführungsform einer erfindungsgemäßen Anzeigevorrichtung 102 basierend auf einem monochromen Flüssigkristall LC-Display mit Infrarot-Filter (IR-Filter) 8. Die Anzeigevorrichtung 102 hat einen Reflektor 1, vor dem ein Polarisator 2 einer ersten Polarisationsrichtung angeordnet ist. Auf dem Polarisator 2 folgt ein Substrat 3 mit einer transparenten Rückelektrode. Auf dem Substrat 3 befindet sich eine flüssigkristalline Schicht 4, auf der sich eine strukturierte Elektrode 5 befindet.

In der hier gezeigten Ausführungsform beinhaltet die strukturierte Elektrode 5 acht ansteuerbare Teilelektroden, die entsprechenden Bildpunkten, so genannten Pixeln, der Anzeigevorrichtung 102 entsprechen. Auf der Elektrode 5 befindet sich ein transparentes Substrat 6, gefolgt von einem Polarisator 7 einer zweiten Polarisationsrichtung, die im Wesentlichen senkrecht auf der ersten Polarisationsrichtung des Polarisators 2 steht. Auf dem Polarisator 7 folgt ein Filter 8, der im Wesentlichen nur für IR-Strahlung transparent ist. Der Filter 8 kann integraler Bestandteil der Anzeigevorrichtung 102 sein. Der Filter 8 kann auch in einer der Schichten des Dokuments 100 realisiert sein, wie zum Beispiel in dem Teilbereich 107 der Vorderseite 3 des Dokuments 100 in der Ausführungsform der Figur 1.

Anstelle einer in der Figur 5 gezeigten reflektiven Ausführungsform, kann die Anzeigevorrichtung 102 basierend auf der LCD-Technologie auch transmissiv ausgebildet sein, wie in der Figur 6 dargestellt. In dieser Ausführungsform ist der Reflektor 1 durch einen Emitter 1' ersetzt, welcher zum Beispiel IR-Strahlung emittiert.

Nach einer weiteren Ausführungsform ist die Anzeigevorrichtung 102 als LED-Anzeige auf Basis von IR-LEDs ausgebildet, bevorzugt mit einer Emission im Bereich von 700 bis 3000 nm, besonders bevorzugt von 700 bis 1100 nm, insbesondere 750 bis 950 nm. Hierbei können sowohl anorganische, organische als auch Hybrid-LEDs eingesetzt werden.

Gemäß einer weiteren Ausführungsform ist die Anzeigevorrichtung 102 auf der Basis von UV-LEDs ausgebildet; bevorzugt wird eine Emission im Bereich von 190 bis 400 nm, besonders bevorzugt von 250 bis 400 nm. Hierbei können sowohl anorganische, organische als auch Hybrid-LEDs eingesetzt werden.

Gemäß einer weiteren Ausführungsform ist die Anzeigevorrichtung 102 als bistabile Anzeigevorrichtung ausgebildet, beispielsweise als Drehelement-Anzeige oder als elektrophoretische Anzeige, insbesondere als so genanntes elektronisches Papier, zum Beispiel auf E-Ink-Basis.

Eine solche Anzeigevorrichtung hat zum Beispiel Drehelemente, die die gleiche Farbe im sichtbaren Spektralbereich aufweisen, und die außerhalb des sichtbaren Spektralbereichs einen Kontrast erzeugen können, indem beispielsweise IR absorbierende und IR transparente oder reflektierende Drehelemente in der Drehelement-Anzeige vorhanden sind. Sowohl die IR transparenten oder reflektierenden als auch die IR absorbierenden Drehelemente können im sichtbaren Bereich im Wesentlichen absorbierend sein, d.h. die Farbe schwarz haben. Eine solche bistabile Anzeige hat insbesondere den Vorteil, dass nur für den Schaltvorgang Energie benötigt wird, wobei die Information auch noch nach Abschaltung der Energieversorgung angezeigt wird.

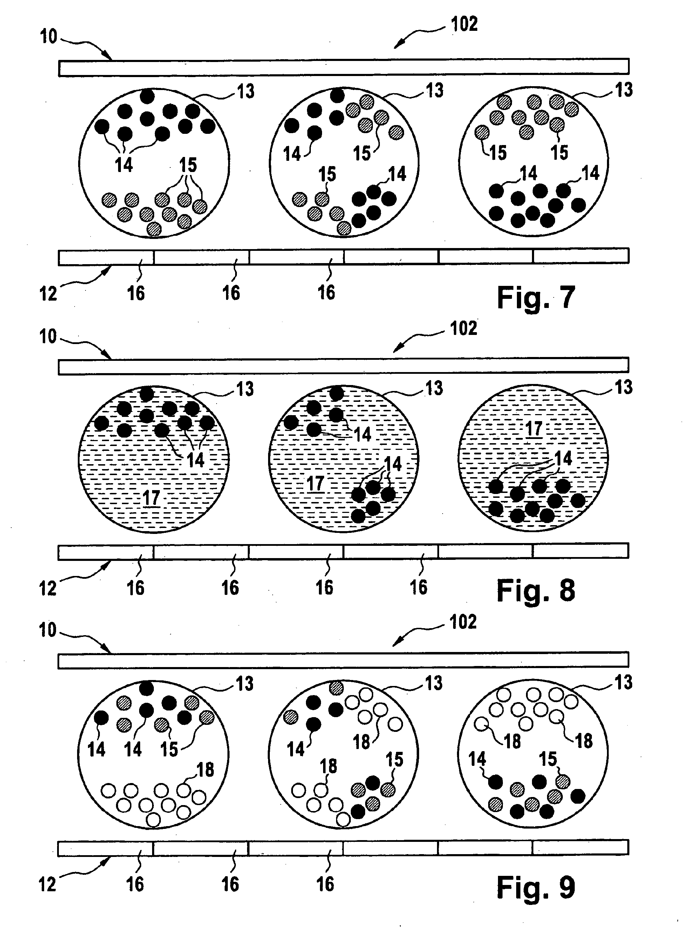

Die Figur 7 zeigt eine Ausführungsform der Anzeigevorrichtung 102 mit einem elektrophoretischen Display auf Basis der E-Ink-Technologie. Die Anzeigevorrichtung 102 hat an ihrer Vorderseite eine transparente Elektrode 10, die zum Beispiel im IR-Bereich transparent ist. Ferner hat die Anzeigevorrichtung 102 eine strukturierte Rückelektrode 12 mit Teilelektroden 16, die zur Ansteuerung von zwischen den Elektroden 10 und 12 befindlichen Mikrosphären 13 ausgebildet sind. Die Mikrosphären 13 können alternativ auch als Mikrocups ausgebildet sein.

Innerhalb jeder der Mikrosphären 13 befinden sich IR absorbierende Partikel 14 und nicht IR absorbierende Partikel 15. Die Partikel 14 und 15 können sich innerhalb ihrer jeweiligen Mikrosphäre 13 entweder in Richtung auf die Elektrode 10 oder in Richtung auf die Elektrode 12 bewegen, je nachdem welches Potential an die betreffende Teilelektrode 16 angelegt wird. Bei den IR absorbierenden Partikeln 14 kann es sich zum Beispiel um mit Ruß gefärbte Partikel handeln.

Die Partikel 15 haben im Wesentlichen dieselbe Farbe wie die Partikel 14, indem sie mit einer entsprechenden Mischung von CMY eingefärbt sind. Sowohl die Partikel 14 und 15 erscheinen also im sichtbaren Licht im wesentlichen schwarz, wohingegen bei Bestrahlung mit IR-Licht ein Kontrast dadurch entsteht, dass nur die Partikel 14 IR absorbierend sind, wohingegen die Partikel 15 IR transparent sind.

Die Figur 8 zeigt eine zu der Figur 7 alternative Ausführungsform der elektrophoretischen Anzeigevorrichtung 102 mit IR absorbierenden Partikeln 14, die sich in einer nicht IR absorbierenden Flüssigkeit 17 innerhalb der Mikrosphären 13 befinden. Innerhalb der Flüssigkeit 17 können sich die Partikel 14 je nach dem an der jeweiligen Teilelektrode 16 angelegten Potential bewegen, d.h. entweder in Richtung auf die Elektrode 10 oder in Richtung auf die Elektrode 12. Bei Bestrahlung der Anzeigevorrichtung 102 mit IR-Licht durch die Elektrode 10 lässt sich der Kontrastunterschied aufgrund der unterschiedlichen Anordnung der Partikel 14 in den Mikrosphären 13 detektieren.

In einer weiteren Ausführungsform sind die Partikel 14 nicht IR absorbierend, die Flüssigkeit 17 hingegen IR absorbierend.

Die Figur 9 zeigt eine Weiterbildung der elektrophoretischen Anzeigevorrichtung 102 der Figur 8. Bei dieser Ausführungsform beinhalten die Mikrosphären 13 zusätzlich Partikel 18, die eine andere Farbe als die Partikel 14 und 15 aufweisen, und die ebenfalls durch Ansteuerung der Teilelektroden 16 innerhalb der jeweiligen Mikrosphären 13 zwischen den Elektroden 10 und 12 beweglich sind. Beispielsweise haben die Partikel 18 einerseits und die Partikel 14, 15 andererseits entgegengesetzte elektrische Ladungen, sodass sich je nach Ansteuerung einer Teilelektrode 16 sich entweder die Partikel 18 oder die Partikel 14 und 15 innerhalb einer Mikrosphäre 13 gruppieren. Aufgrund der unterschiedlichen Farbe der Partikel 14, 15 einerseits und der Partikel 18 andererseits, ergibt sich bei jedem Schaltvorgang ein anderes von der Anzeigevorrichtung 102 angezeigtes Muster..

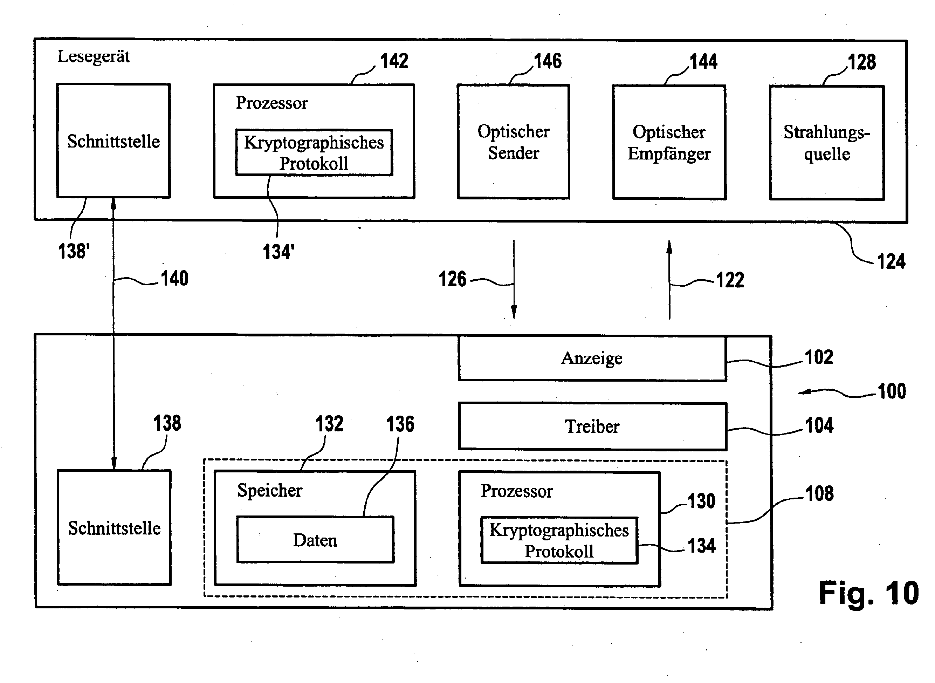

Die Figur 10 zeigt eine Ausführungsform des Dokuments 100 mit einem Prozessor 130 und einem elektronischen Speicher 132. Der Prozessor 130 und der Speicher 132 können als ein integrierter elektronischer Schaltkreis 108 realisiert sein. Auch der Treiber 104 kann als Teil des integrierten elektronischen Schaltkreises 108 realisiert sein. Der Prozessor 130 dient zur Ausführung von Programminstruktionen 134. Die Ausführung der Programminstruktionen 134 kann die das Dokument 100 betreffenden Schritte eines kryptographischen Protokolls enthalten. Der elektronische Speicher 132 dient zur Speicherung von Daten 136, wie zum Beispiel von Personalisierungsdaten.

Das Dokument 100 hat eine Schnittstelle 138 zum Aufbau einer Kommunikationsverbindung 140 mit einer entsprechenden Schnittstelle 138' des Geräts 124. Die Schnittstelle 138 ist vorzugsweise als RFID-Schnittstelle ausgebildet und beinhaltet eine Antenne 112 (vgl. die Ausführungsform der Figur 2).

Das Gerät 124 hat einen Prozessor 142 zur Ausführung von Programminstruktionen 134'. Durch Ausführung der Programminstruktionen 134' werden die das Gerät 124 betreffenden Schritte des kryptographischen Protokolls ausgeführt.

Das Gerät 124 hat einen optischen Empfänger 144 zum Empfang des maschinenlesbaren optischen Signals 122 von der Anzeigevorrichtung 102. Bei dem optischen Empfänger 144 handelt es sich zum Beispiel um einen CCD-Sensor, der in dem visuell nicht wahrnehmbaren spektralen Bereich sensitiv ist.

Das Gerät 124 hat ferner einen optischen Sender 146 für einen Lesestrahl 126 zum Lesen der Anzeige, die von der Anzeigevorrichtung generiert wird. Hierbei kann es sich Beispielsweise um eine Lampe, eine LED oder einen Laser handeln. Der Lesestrahl beinhaltet den visuell nicht wahrnehmbaren spektralen Bereich; vorzugsweise ist der Lesestrahl auf den visuell nicht wahrnehmbaren spektralen Bereich beschränkt, so dass die Tatsache, dass das Dokument 100 mit dem Lesestrahl beaufschlagt wird, nicht durch einen Benutzer visuell wahrnehmbar ist.

Aufgrund der Ausführung der Programminstruktionen 134 steuert der Prozessor 130 den Treiber 104 zur Ausgabe des optischen Signals 122 an, wobei der Prozessor 130 dem optischen Signal die auszugebende Information aufmoduliert, beispielsweise mit Hilfe einer Amplituden-, Pulsweiten-, Phasen- und/oder Frequenzmodulation. Bei dem optischen Signal 122 kann es sich um ein serielles oder ein paralleles optisches Signal handeln. Ferner können auch mehrere optische Signale 122 gleichzeitig oder zeitlich nacheinander über die Anzeige 102 ausgegeben werden. Bei der Ausgabe des optischen Signals 122 werden ein oder mehrere der Segmente der Anzeige 102 (vgl. Segmente 114, 116, 118 und 120, Figuren 3 und 4) angesteuert werden.

Ebenso kann der Prozessor 130 aufgrund der Ausführung der Programminstruktionen 134 den Treiber 104 zur Ansteuerung der Anzeige 102 für die Erfassung des optischen Signals 126 ansteuern. Die dadurch erhaltenen Informationen können durch den Prozessor 130 weiterverarbeitet werden, um auf dieser Grundlage beispielsweise ein oder mehrere weitere optische Signale 120 zu generieren und über die Anzeige 102 auszugeben.

Die Datenübertragung zwischen dem Dokument 100 und dem Gerät 124 kann sowohl seriell als auch parallel erfolgen. Im ersten Fall wird die Information durch eine zeitliche Veränderung des auf der Anzeige 102 dargestellten Inhalts übertragen und im zweiten Fall durch die örtliche Auflösung der auf der Anzeige 102 dargestellten Information. Zum Austausch größerer Datenmengen können auch die serielle und die parallele Datenübertragung miteinander kombiniert werden.

Der Aufbau der Anzeige 102 kann vollflächig sein, zum Beispiel um eine 1-Bit-Information zu übertragen, oder die Anzeige kann als segmentiertes Display, als Passivmatrixdisplay oder als Aktivmatrixdisplay ausgebildet sein.

Das Dokument 100 muss nicht über eine eigene Energieversorgungsquelle, wie zum Beispiel eine Batterie verfügen. Die Energieversorgung kann beispielsweise über die Schnittstelle 138 erfolgen. Beispielsweise wird in die Schnittstelle 138 von der Schnittstelle 138' des Geräts 124 elektrische Energie eingekoppelt, die zur Versorgung des integrierten elektronischen Schaltkreises 108, des Treibers 104 und/oder der Anzeige 102 dient. Dies ist insbesondere vorteilhaft, um die Funktionsfähigkeit des Dokuments über seine gesamte Laufzeit hin zu gewährleisten. Von besonderem Vorteil ist dabei, wenn die Schnittstelle 138 als kontaktlose Schnittstelle ausgebildet ist, da dann auch das Problem der Korrosion und Abnutzung der Kontakte der Schnittstelle über die Laufzeit des Dokuments entfällt.

Bei den in dem elektronischen Speicher 132 gespeicherten Daten 136 des Dokuments 100 kann es sich um Personalisierungsdaten handeln, wie zum Beispiel den Namen, die Adresse, ein Gesichtsbild, Fingerabdruckdaten und eine Unterschrift des Trägers des Dokuments. Die Ausgabe dieser Daten in Form des optischen Signals 122 und/oder über die Schnittstelle 138 aus dem Dokument 100 kann an die Bedingung der vorherigen erfolgreichen Durchführung des kryptographischen Protokolls geknüpft sein.

Zum Lesen der Daten 136 mit Hilfe des Geräts 124 wird beispielsweise wie folgt vorgegangen:

Das Dokument 100 wird in die Nähe des Geräts 124 gebracht, so dass elektrische Energie in das Dokument über dessen Schnittstelle 138 eingekoppelt wird. Dadurch wird die Ausführung der Programminstruktionen 134 durch den Prozessor 130 gestartet. Durch Ausführung der Programminstruktionen 134 wird eine Kennung, wie zum Beispiel eine Zufallszahl, generiert. Die Kennung wird über die Anzeige 102 durch entsprechende Modulation des optischen Signals 122 ausgegeben und mit Hilfe des optischen Empfängers 144 des Geräts 124 empfangen.

Durch Ausführung der Programminstruktionen 134' bewirkt der Prozessor 142 daraufhin, dass aus der so empfangenen Kennung und einem geheimen Schlüssel ein weiterer Schlüssel gewonnen wird, der für die Durchführung des kryptographischen Protokolls verwendet wird. Beispielsweise wird auf diese Art und Weise ein symmetrischer oder ein asymmetrischer Schlüssel generiert, der für die erfolgreiche Durchführung des kryptographischen Protokolls erforderlich ist.

In einer Ausführungsform der Erfindung wird beispielsweise aus der Kennung und einem geheimen Schlüssel ein asymmetrisches Schlüsselpaar bestehend aus einem geheimen und einem öffentlichen Schlüssel generiert. Der öffentliche Schlüssel wird daraufhin von dem Gerät 124 über dessen Schnittstelle 138' und die Kommunikationsverbindung 140 oder dessen optischen Sender 146 als optisches Signal 126 an das Dokument 100 übertragen. Dieser öffentliche Schlüssel wird beispielsweise zur anschließenden Durchführung eines Challenge-Response-Verfahrens verwendet.

Nachdem das kryptographische Protokoll erfolgreich abgearbeitet worden ist, werden die Daten 136 von dem Prozessor 130 aus dem elektronischen Speicher 132 ausgelesen und ganz oder teilweise auf der Anzeige 102 im Klartext angezeigt und/oder als maschinenlesbares optisches Signal 122 und/oder über die Kommunikationsverbindung 140 an das Gerät 124 übertragen.

Zur optischen Erfassung der Anzeigevorrichtung 102 ist der optische Empfänger 144 beispielsweise als IR sensitive Kamera, zum Beispiel einer auf Si-Technik basierenden CCD- oder CMOS-Technik ausgebildet; beispielsweise hat die IR sensitive Kamera hierzu einen entsprechenden Langpass-Filter.

Falls die Abstrahlung des maschinenlesbaren optischen Signals 122 im UV-Bereich erfolgt, können analoge CCD- oder CMOS-Kameras eingesetzt werden. Im Falle von sehr hoch energetischer Strahlung können Konverterschichten auf diese aufgebracht werden.

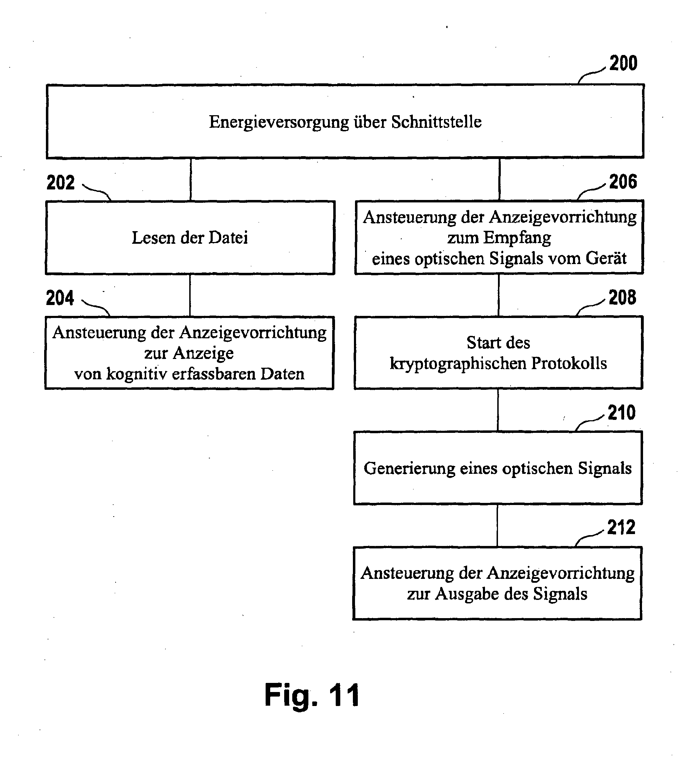

Die Figur 11 zeigt ein Flussdiagramm einer Ausführungsform eines erfindungsgemäßen Verfahrens. In dem Schritt 200 wird elektrische Energie über die Schnittstelle des Dokuments eingekoppelt, beispielsweise von einem externen Schreib- und/oder Lesegerät. Daraufhin werden in dem Schritt 202 nicht oder nur wenig sensitive Daten aus einem elektronischen Speicher des Dokuments gelesen und in dem Schritt 204 auf einer weiteren Anzeigevorrichtung des Dokuments ausgegeben (vgl. Anzeigevorrichtung 111 der Fig. 3), wobei die Anzeige in einer für einen menschlichen Benutzer visuell und kognitiv ohne Weiteres erfassbaren Form, wie zum Beispiel im Klartext, erfolgt.

Nach dem Schritt 200 wird ferner ein Schritt 206 durchgeführt, in dem die Anzeigevorrichtung des Dokuments zum Empfang eines optischen Signals von dem externen Gerät angesteuert wird. Aufgrund der von dem externen Gerät über das optische Signal empfangenen Informationen wird in dem Schritt 208 ein kryptographisches Protokoll gestartet. Alternativ oder zusätzlich erfolgt der Empfang eines Signals von dem Lesegerät durch die Schnittstelle 138, wobei aufgrund des Empfangs des Signals das kryptographisches Protokoll gestartet wird.

Nach erfolgreicher Durchführung des kryptographischen Protokolls werden in dem Schritt 210 sensitive Daten aus dem elektronischen Speicher des Dokuments gelesen, wie zum Beispiel Fingerabdruckdaten, und es wird ein entsprechendes maschinenlesbares optisches Signal generiert, welches durch entsprechende Ansteuerung der Anzeigevorrichtung in dem Schritt 212 zum Empfang durch das externe Gerät in einem visuell nicht wahrnehmbaren spektralen Bereich ausgegeben wird.

In einer weiteren Ausführungsform wird zunächst über die Schnittstelle des Dokuments Energie eingekoppelt, und eine Kommunikation zum Prozessor des Lesegeräts hergestellt. Nach optionaler Durchführung eines kryptographischen Protokolls wird die Information auf dem Anzeigeelement in einem visuell nicht wahrnehmbaren spektralen Bereich dargestellt..

### Bezugszeichenliste

- 1: Reflektor
- 1': Emitter
- 2: Polarisator
- 3: Substrat
- 4: Schicht
- 5: Teilelektrode
- 5': Teilelektrode
- 5": Teilelektrode
- 5"': Teilelektrode
- 5"": Teilelektrode
- 6: Substrat
- 7: Polarisator
- 8: Filter
- 8': Filter
- 8": Filter
- 8"': Filter
- 8"": Filter
- 10: Elektrode
- 12: Elektrode
- 13: Mikrosphäre
- 14: Partikel
- 15: Partikel
- 16: Teilelektrode
- 17: Flüssigkeit
- 18: Partikel
- 100: Dokument
- 101: Inlay
- 102: Anzeigevorrichtung
- 103: Vorderseite
- 104: Treiber
- 105: Rückseite
- 106: Datenleitung
- 107: Teilbereich
- 108: integrierter elektronischer Schaltkreis
- 109: Öffnung
- 110: Modul
- 111: Anzeigevorrichtung
- 112: Antenne
- 114: Segment
- 116: Segment
- 118: Segment
- 120: Segment
- 122: optisches Signal
- 124: Gerät
- 126: Lesestrahl
- 128: Strahlungsquelle
- 130: Prozessor
- 132: Speicher
- 134: Programminstruktionen
- 134': Programminstruktionen
- 136: Daten
- 138: Schnittstelle
- 140: Kommunikationsverbindung
- 142: Prozessor
- 144: Empfänger
- 146: Sender
- 148: Passbild
- 150: Teilbild
- 152: Teilbild
- 154: Teilbild
- 156: Teilbild

## Patentansprüche

1. Dokument mlt einem optischen Sender (102) zur Ausgabe mindestens eines maschinenlesbaren optischen Signals in einem visuell nicht wahrnehmbaren spektralen Bereich, wobei das Dokument einen Dokumentenkörper (101, 103, 105) hat, in den der optische Sender integriert ist, wobei das Dokument in zumindest einem Teilbereich (107) in dem spektralen Bereich transparent ist, wobei der optische Sender eine Anzelgevorrichtung (102) beinhaltet, **dadurch gekennzeichnet, dass** die Anzeigevorrichtung als Segment- oder Matrixdisplay ausgebildet ist, und mit einem Treiber (104) zur Ansteuerung von einem oder mehreren der Anzeigeelemente der Anzeigevorrichtung für die Ausgabe des maschinenlesbaren optischen Signals.

2. Dokument nach Anspruch 1, wobei der Dokumentenkörper den Sender vollständig umschließt, sodass das Vorhandensein des Senders in dem Dokument (100) von einem Benutzer ohne technische Hilfsmittel nicht feststellbar ist.

3. Dokument nach Anspruch 1 oder 2, wobei der optische Sender zur Abstrahlung des optischen Signals in einem Infrarot- (IR) und/oder ultravioletten (UV) Bereich ausgebildet ist.

4. Dokument nach einem der vorhergehenden Ansprüche, wobei eine Oberfläche des Dokuments durch eine Schicht (103) gebildet wird, die in dem visuell nicht wahrnehmbaren spektralen Bereich transparent und in dem visuell wahrnehmbaren spektralen Bereich opak ist.

5. Dokument nach Anspruch 4, wobei sich die Schicht (103) über die Vorderseite oder die Unterseite des Dokument erstreckt.

6. Dokument nach einem der vorhergehenden Ansprüche, wobei es sich bei der Anzeigevorrichtung um eine LED-Anzeige, LCD-Anzeige, eine bistabile Anzeige, insbesondere eine elektrophoretische Anzeige oder eine DrehelementAnzeige, und/oder eine semi-bistabile Anzeige, zum Beispiel eine elektrochrome Anzeige, handelt.

7. Dokument nach einem der vorhergehenden Ansprüche, mit einem Filter (8, 8"") zum Durchlass der Strahlung in dem visuell nicht wahrnehmbaren spektralen Berelch.

8. Dokument nach einem der vorhergehenden Ansprüche, wobei die Anzeigevorrichtung emissiv, reflektiv oder transmissiv ist.

9. Dokument nach einem der vorhergehenden Ansprüche, mit einer weiteren Anzeigevorrichtung (111) zur Ausgabe eines visuell für das menschliche Auge wahrnehmbaren Signals.

10. Dokument nach Anspruch 9, wobei die weitere Anzeigevorrichtung (111) in einer Öffnung des Teilbereichs angeordnet ist.

11. Dokument nach Anspruch 10, wobei es sich bei dem Teilbereich um die Vorderseite (103) oder die Rückseite (105) des Dokuments handelt.

12. Dokument nach einem der vorhergehenden Ansprüche, wobei die Anzeigevorrichtung Anzelgeelemente (14) aufweist, die in dem nicht visuell wahrnehmbaren Bereich absorbierend wirken, und die sich in einer Flüssigkeit (17) befinden, wobei die Flüssigkeit in dem visuell nicht wahrnehmbaren spektralen Bereich transparent ist.

13. Dokument nach einem der vorhergehenden Ansprüche, wobei es sich um ein Wert- oder Sicherheitsdokument handelt, beispielsweise ein Ausweisdokument, insbesondere einen Personalausweis, einen Reisepass, ein Visum oder einen Firmenausweis, eine Kreditkarte, einen Führerschein, einen Berechtigungsnachweis oder dergleichen,

14. Kommunikationsverfahren für ein Dokument (100) nach einem der Ansprüche 1 bis 13, wobei eine Datenausgabe durch Ausgabe eines maschineniesbaren optischen Signals in einem visuell nicht wahrnehmbaren spektralen Bereich durch einen optischen Sender (102) des Dokuments erfolgt.

15. Kommunikationsverfahren nach Anspruch 14, wobei mit dem optischen Signal eine Information empfangen wird, die für die Durchführung eines kryptographischen Protokolls verwendet wird.

## Claims

1. A document, comprising an optical transmitter (102) for outputting at least one machine-readable optical signal in a visually imperceptible spectral range, wherein the document has a document body (101, 103, 105), in which the optical transmitter is integrated, wherein the document is transparent in the spectral range in at least one sub-region (107), wherein the optical transmitter includes a display apparatus (102), **characterised in that** the display apparatus is formed as a segment display or matrix display, and comprising a driver (104) for controlling one or more of the display elements of the display apparatus for the output of the machine-readable optical signal.

2. The document according to Claim 1, wherein the document body completely surrounds the transmitter such that the presence of the transmitter in the document (100) is not ascertainable by a user without technical aids.

3. The document according to Claim 1 or 2, wherein the optical transmitter is designed for radiation of the optical signal in an infrared (IR) and/or ultraviolet (UV) range.

4. The document according to one of the preceding claims, wherein a surface of the document is formed by a layer (103) that is transparent in the visually imperceptible spectral range and is opaque in the visually perceptible spectral range.

5. The document according to Claim 4, wherein the layer (103) extends over the front side or the underside of the document.

6. The document according to one of the preceding claims, wherein the display apparatus is an LED display, LCD display, a bistable display, in particular an electrophoretic display or a rotary element display, and/or a semi-bistable display, for example an electrochromic display.

7. The document according to one of the preceding claims, comprising a filter (8, 8"") for allowing the passage of radiation in the visually imperceptible spectral range.

8. The document according to one of the preceding claims, wherein the display apparatus is emissive, reflective or transmissive.

9. The document according to one of the preceding claims, comprising a further display apparatus (111) for outputting a signal that is visually perceptible for the human eye.

10. The document according to Claim 9, wherein the further display apparatus (111) is arranged in an opening in the sub-region.

11. The document according to Claim 10, wherein the sub-region is the front side (103) or the rear side (105) of the document.

12. The document according to one of the preceding claims, wherein the display apparatus comprises display elements (14), which act in an absorbing manner in the visually imperceptible range and which are located in a liquid (17), wherein the liquid is transparent in the visually imperceptible spectral range.

13. The document according to one of the preceding claims, wherein said document is a value or security document, for example an identification document, in particular a personal identity card, a passport, a visa or a corporate identification card, a credit card, a driver's licence, a credential or the like.

14. A communication method for a document (100) according to one of preceding Claims 1 to 13, wherein a data output occurs by outputting a machine-readable optical signal in a visually imperceptible spectral range by means of an optical transmitter (102) of the document.

15. The communication method according to Claim 14, wherein information is received with the optical signal and is used to carry out a cryptographic protocol.

## Revendications

1. Document avec un émetteur optique (102) pour l'émission d'au moins un signal optique lisible par machine, dans une plage spectrale non perceptible visuellement, dans lequel le document possède un corps de document (101, 103, 105) dans lequel est intégré l'émetteur optique, dans lequel le document est transparent dans au moins une région partielle (107) dans la plage spectrale, dans lequel l'émetteur optique contient un dispositif d'affichage (102), **caractérisé en ce que** le dispositif d'affichage est conçu comme un affichage à segments ou à matrice, et avec un pilote (104) pour l'activation d'un ou de plusieurs éléments d'affichage du dispositif d'affichage, pour l'émission du signal optique lisible par machine.

2. Document selon la revendication 1, dans lequel le corps de document enveloppe complètement l'émetteur, de sorte que la présence de l'émetteur dans le document (100) ne peut pas être constatée par un utilisateur sans accessoire technique.

3. Document selon la revendication 1 ou 2, dans lequel l'émetteur optique est conçu pour émettre le signal optique dans une plage infrarouge (IR) et/ou d'ultraviolets (UV).

4. Document selon l'une des revendications précédentes, dans lequel une surface du document est formée par une couche (103) transparente dans la plage spectrale non perceptible visuellement et opaque dans la plage spectrale perceptible visuellement.

5. Document selon la revendication 4, dans lequel la couche (103) s'étend sur le côté avant ou le côté de dessous du document.

6. Document selon l'une des revendications précédentes, dans lequel le dispositif d'affichage est un affichage DEL, un affichage LCD, un affichage bistable, en particulier un affichage électrophorétique ou un affichage à éléments rotatifs, et/ou un affichage semi-bistable, par exemple un affichage électrochrome.

7. Document selon l'une des revendications précédentes, avec un filtre (8, 8"') pour le passage du rayonnement dans la plage spectrale non perceptible visuellement.

8. Document selon l'une des revendications précédentes, dans lequel le dispositif d'affichage est émissif, réfléchissant ou transmissif.

9. Document selon l'une des revendications précédentes, avec un dispositif d'affichage supplémentaire (111) pour l'émission d'un signal perceptible visuellement à l'oeil nu.

10. Document selon la revendication 9, dans lequel le dispositif d'affichage supplémentaire (111) est agencé dans une ouverture de la région partielle.

11. Document selon la revendication 10, dans lequel la région partielle est le côté avant (103) ou le côté arrière (105) du document.

12. Document selon l'une des revendications précédentes, dans lequel le dispositif d'affichage comporte des éléments d'affichage (14) agissant de façon absorbante dans la plage non perceptible visuellement et situés dans un liquide (17), dans lequel le liquide est transparent dans la plage spectrale non perceptible visuellement.

13. Document selon l'une des revendications précédentes, dans lequel il s'agit d'un document de valeur ou de sécurité, par exemple d'un document d'identité, en particulier une carte d'identité, un passeport, un visa ou une carte d'entreprise, une carte de crédit, un permis de conduire, un certificat ou autres.

14. Procédé de communication pour un document (100) selon l'une des revendications 1 à 13, dans lequel des données sont envoyées par l'émission d'un signal optique lisible par machine dans une plage spectrale non perceptible visuellement, par un émetteur optique (102) du document.

15. Procédé de communication selon la revendication 14, dans lequel une information est reçue avec le signal optique, laquelle est utilisée pour l'exécution d'un protocole cryptographique.
